# EUROPEAN PATENT SPECIFICATION

(11) **EP 3 886 014 B1**
(45) Date of publication and mention of the grant of the patent: **03.09.2025**
(21) Application number: 18940536.8
(22) Date of filing: 29.12.2018
(51) Int. Cl.: G05D 1/00

(54) **ROBOT-BASED LOGISTICS ZONING PICKING METHOD, DEVICE, TERMINAL AND SYSTEM, AND STORAGE MEDIUM**
VERFAHREN, VORRICHTUNG, ENDGERÄT UND SYSTEM ZUR ROBOTERBASIERTEN LOGISTIKZONENKOMMISSIONIERUNG UND SPEICHERMEDIUM
PROCÉDÉ, DISPOSITIF, TERMINAL ET SYSTÈME D'ENLÈVEMENT DE ZONAGE LOGISTIQUE REPOSANT SUR UN ROBOT

(30) Priority: 19.11.2018 CN 201811371601
(43) Date of publication of application: 29.09.2021
(73) Proprietor: Syrius Robotics Co., Ltd., Shenzhen, Guangdong 518055 (CN)
(72) Inventor: WAN, Qi, Shenzhen, Guangdong 518000 (CN); YANG, Zhiqin, Shenzhen, Guangdong 518000 (CN)
(74) Representative: Penza, Giancarlo
(86) International application number: PCT/CN2018/125156
(87) International publication number: WO 2020/103299

(56) References cited:
- CN-A- 105 858 045
- CN-A- 107 025 491
- CN-A- 107 108 122
- CN-A- 107 516 142
- CN-A- 108 100 548
- CN-A- 108 202 965
- CN-U- 207 551 088
- US-A1- 2016 101 940
- US-A1- 2016 176 638
- US-A1- 2017 278 047
- US-A1- 2018 096 299

## Description

### Technical Field

The invention relates to the technical field of logistics robots, and particularly to a robot-based subarea logistics picking method and apparatus, a terminal, a system and a storage medium.

### Background

The development of electronic commerce and mobile terminals has far-reaching influences on the development of the field of logistics. Conventional large-scale orders are gradually replaced with small-batch high-frequency orders developed based on electronic commerce, and the small-batch high-frequency orders also make new requirements on the timeliness of warehouse picking manners in the field of warehouse logistics.

Manual picking is mainly adopted in conventional warehouse picking manners. Manual picking is a labor-intensive link, mainly reflected by traveling by legs between storage racks and packaging positions to achieve a purpose of picking for delivery after goods are picked according to orders. Conventional manual picking manners include a conveyor-belt-based subarea picking manner, i.e., a picking manner of implementing picking based on areas respectively. In the conventional subarea picking manner, pickers are distributed at upstream and downstream of picking area and are responsible for respective fixed areas, and goods are conveyed from the upstreams of the picking areas to the downstream of the picking area by automatic transmission devices such as conveyor belts, thereby achieving a purpose of delivering the goods. In the conveyor-belt-based subarea picking manner, the areas are fixed, the pickers are fixed, and the conveyor belts are fixed, so that the conveyor-belt-based subarea picking manner is also called a static subarea picking manner.

The static subarea picking manner has the advantages that travel waste caused by traveling of the pickers between the picking area and packaging area can be avoided and low picking efficiency caused by unfamiliar operations is avoided because the pickers are only responsible for familiar area. However, the conveyor belts with large sizes cannot be moved after laid, which not only occupies a warehouse space but also severely limits the flexibility in planned use of the warehouse space. For example, manpower allocation and picking efficiency of the picking areas are fixed once lengths and arrangement positions of the conveyor belts are determined. In a high-intensity working environment, high-load work in a certain area is likely to cause congestion, and workers finishing work earlier have to wait for workers finishing work later. Consequently, the efficiency of the workers is reduced, and requirements of small-batch high-frequency orders on subarea picking efficiency and flexibility in an electronic commerce environment cannot be met.

In summary, the static subarea picking manner has the technical problem that the requirements of the small-batch high-frequency orders on subarea picking efficiency and flexibility in the electronic commerce environment cannot be met.

Patent US 2017/0278047A1, US 2018/096299A1, CN108202965A, CN 108100548A, US 2016/176638A1, and US 2016/101940A1 provide respective technical solutions; however, the above mentioned problem still remains unsolved.

### Summary

The invention is intended to provide a robot-based subarea logistics picking method and apparatus, a terminal, a system and a storage medium, to solve the technical problem that a subarea picking method cannot be adapted to requirements of small-batch high-frequency orders on subarea picking efficiency and flexibility in an electronic commerce environment.

The above technical problem is solved according to the appended claims.

### Brief Description of the Drawings

Fig. 1 is a flowchart of a robot-based subarea logistics picking method according to an embodiment;
Fig. 2 is a flowchart of an improved method based on a robot-based subarea logistics picking method according to an embodiment;
Fig. 3 is a flowchart of an improved method based on a robot-based subarea logistics picking method according to an embodiment;
Fig. 4 is a schematic structural diagram of a robot-based subarea logistics picking apparatus according to an embodiment;
Fig. 5 is a schematic structural diagram of an improved apparatus based on a robot-based subarea logistics picking apparatus according to an embodiment;
Fig. 6 is a schematic structural diagram of an improved apparatus based on a robot-based subarea logistics picking apparatus according to an embodiment;
Fig. 7 is a schematic diagram of a subarea logistics picking scenario;
Fig. 8 is a schematic diagram of an interaction interface;
Fig. 9 is a schematic structural diagram of an electronic device according to an embodiment; and
Fig. 10 is a schematic structural diagram of a robot-based subarea logistics picking system according to an embodiment.

### Detailed Description of the Embodiments

In order to make the objectives, technical solutions and advantages of the invention clearer, the following further describes the invention in detail with reference to the drawings and embodiments. It should be understood that, in the descriptions of the invention, unless otherwise clearly specified and limited, term "storage medium" can be various media capable of storing computer programs, such as a Read-Only Memory (ROM), a Random Access Memory (RAM), a magnetic disk, or an optical disk. Term "processor" can be a chip or circuit with a data processing function, such as a Complex Programmable Logic Device (CPLD), a Field-Programmable Gate Array (FPGA), a Microcontroller Unit (MCU), a Programmable Logic Controller (PLC), and a Central Processing Unit (CPU). Term "electronic device" can be any device with the data processing function and a storage function, and can usually include a fixed terminal and a mobile terminal. The fixed terminal is, for example, a desktop computer. The mobile terminal is, for example, a mobile phone, a PAD, and a mobile robot. In addition, the technical features involved in different implementation modes of the invention described later can be combined with each other as long as they do not conflict with each other.

In the following, the invention proposes some preferred embodiments with reference to a correlated conventional art to teach those skilled in the art to implement.

In the conventional art, a subarea picking manner is mainly a static subarea picking manner based on coordination of conveyor belts and subarea pickers. The static subarea picking manner has the advantages that travel waste caused by traveling of the pickers between picking areas and packaging areas can be avoided and low picking efficiency caused by unfamiliar operations is avoided because the pickers are only responsible for familiar areas. However, the conveyor belts with large sizes cannot be moved after laid, which not only occupies a warehouse space but also severely limits the flexibility in planned use of the warehouse space. For example, manpower allocation and picking efficiency of the picking areas are fixed once lengths and arrangement positions of the conveyor belts are determined, and requirements of small-batch high-frequency orders on subarea picking efficiency and flexibility in an electronic commerce environment cannot be met.

In summary, the static subarea picking manner has the technical problem that the requirements of the small-batch high-frequency orders on subarea picking efficiency and flexibility in the electronic commerce environment cannot be met.

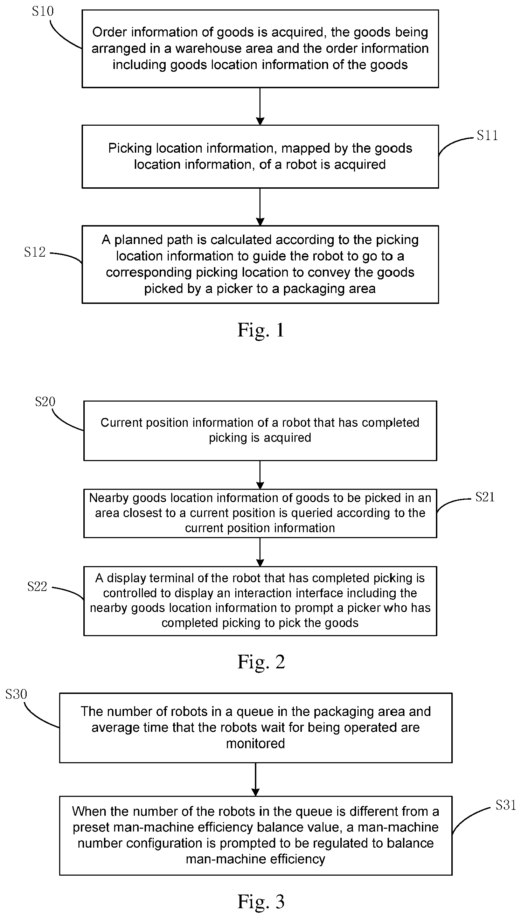

Fig. 1 is a flowchart of a robot-based subarea logistics picking method according to an embodiment, and shows a robot-based subarea logistics picking method. According to the picking method, an occupation rate of a warehouse space can be reduced, the flexibility in planned use of the warehouse space can be improved, and moreover, human-machine configuration can be implemented flexibly to meet requirements of small-batch high-frequency order on subarea picking efficiency and flexibility in an electronic commerce environment.

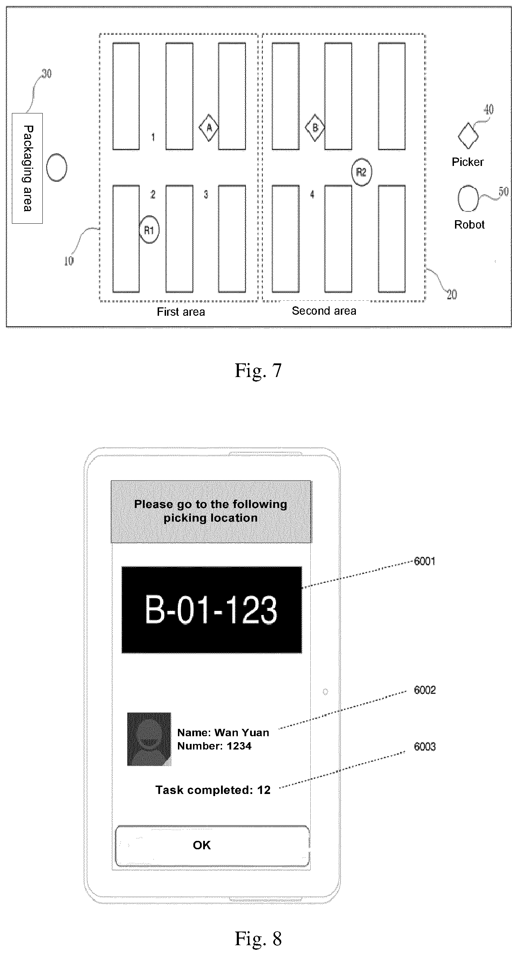

Referring to Fig. 1 and Fig. 7, a robot-based subarea logistics picking method includes the following steps.

In S10, order information of goods is acquired, the goods being arranged in a warehouse area and the order information including goods location information of the goods.

In S11, picking location information, mapped by the goods location information, of a robot is acquired.

In S12, a planned path for guiding the robot is calculated according to the picking location information to guide the robot to go to a corresponding picking location to convey the goods picked by a picker to a packaging area.

In the embodiment, the order information of the goods is acquired, the goods being arranged in the warehouse area and the order information including the goods location information of the goods, then the picking location information, mapped by the goods location information, of the robot is acquired, and the planned path for guiding the robot is calculated according to the picking location information to guide the robot to go to the corresponding picking location to convey the goods picked by the picker to the packaging area, so that an occupation rate of a warehouse space is reduced, the flexibility in planned use of the warehouse space is improved, and moreover, human-machine configuration can be implemented flexibly to meet requirements of small-batch high-frequency orders on subarea picking efficiency and flexibility in an electronic commerce environment.

It is to be noted that, in S10, a robot management system acquires the order information of the goods. The order information, acquired by the robot management system, of the goods can be from a warehouse management system. An existing warehouse management system usually stores warehouse area information, goods location information, goods information corresponding to a goods location, picker information, etc., and the information can be called by a cloud system and the robot. Many goods can be arranged in each warehouse area, and pickers 40 and robots 50 can be allocated reasonably for goods picking. In the embodiment, the warehouse areas can include a first area 10 and a second area 20.

It is also to be noted that, in S11, the robot can call the goods location information from the warehouse management system, so that the robot can calculate the picking location corresponding to the goods in an order task (for example, responsible for one or more picking locations in picking location 1, picking location 2, picking location 3, picking location 5, and other picking locations) according to the received goods location information and send the picking location information to the robot management system. In addition, the robot management system can call the goods location information from the warehouse management system, so that the goods location information of the robot can be found by mapping.

It is further to be noted that, in S12, the robot management system is logically bound with the robot, so that the robot management system can know a position of the robot at any time. The robot management system obtains the picking location information, so that the planned path for guiding the robot can be calculated according to the goods location information and the real-time position of the robot, and the robot is guided through the planned path to go to the corresponding picking location to convey the goods picked by the picker to the packaging area 30.

Fig. 2 is a flowchart of an improved method of a robot-based subarea logistics picking method according to an embodiment, and shows an improved method of the robot-based subarea logistics picking method in Fig. 1.

Referring to Fig. 2 and Fig. 7, the robot-based subarea logistics picking method further includes the following steps.

In S20, current position information sent by a robot that has completed picking is acquired.

In S21, nearby goods location information of goods to be picked in an area closest to a current position is queried according to the current position information.

In S22, a display terminal of the robot that has completed picking is controlled to display an interaction interface including the nearby goods location information to prompt a picker who has completed picking to pick the goods.

In the embodiment, the current position information sent by the robot that has completed picking is acquired, then the nearby goods location information of the goods to be picked in the area closest to the current position is queried according to the current position information, and the display terminal of the robot that has completed picking is controlled to display the interaction interface including the nearby goods location information to prompt the picker completing picking to pick the goods, so that technical effects of avoiding idle manpower and improving the picking efficiency are achieved.

Referring to Fig. 7 and Fig. 8, taking robot R1, robot R2, picker A and picker B as an example, it is assumed that picker A and picker B pick goods in the first area 10 and the second area 20 respectively, robot R1 is responsible for picking location 1, picking location 2 and picking location 3 and robot R2 is responsible for picking location 4, and it is also assumed that picking B and robot R2 complete a task of picking location 4 earlier. In such case, the robot management system receives current position information sent by robot R2, then queries nearby goods location information of goods to be picked in an area closest to a current position according to the current position information and controls a display terminal of the robot that has completed picking to display an interaction interface including the nearby goods location information to prompt picker B to go to a nearby goods location corresponding to the goods location information in the first area 10 to assist in picking goods. For example, A goods location information display bar 6001 displays nearby goods location information B-01-123.

It is to be noted that, in S20 and S21, the robot management system acquires the current position information sent by the robot that has completed picking and knows that a picking task of the picker for a corresponding picking location has been completed, so that the nearby goods location information of the goods to be picked in the area closest to the current position can be queried according to the current position information to prompt the picker to go to a closest picking location to pick the goods, and the technical effects of avoiding idle manpower and improving the picking efficiency are achieved.

It is also to be noted that, in S22, besides the nearby goods location information, information on the interaction interface also includes information about the picker, information indicating that a picking task of the picker is completed in working time, goods information, goods barcode information, goods stock information, etc.

On one aspect, a picker can assist a picker in an adjacent area in picking goods through nearby goods location information, so that personnel circulation is promoted, and the picking efficiency is improved.

On another aspect, a picker in an area can pick goods in another area according to an interaction interface, and is not required to be trained specially for picking goods in adjacent areas, so that picking training time and cost are reduced.

On another aspect, the interaction interface automatically displays the information indicating that the picking task of the picker is completed in the working time, so that administrative cost in job rating can be reduced, and meanwhile, the enthusiasm of pickers is improved by encouraging more pay for more work to improve the picking efficiency. For example, a task statistical display bar 6003 displays the number of picked goods 12, and a personal information display bar displays the name Wang Yuan and number 1234 of the picker presently executing a task.

Fig. 3 is a flowchart of an improved method of a robot-based subarea logistics picking method according to an embodiment, and shows an improved method of the robot-based subarea logistics picking method in Fig. 1.

Referring to Fig. 3 and Fig. 7, the robot-based subarea logistics picking method further includes the following steps.

In S30, the number of robots in a queue in the packaging area and average time that the robots wait for being operated are monitored.

In S31, when the number of the robots in the queue is different from a preset human-machine efficiency balance value, a human-machine number configuration is prompted to be regulated to balance human-machine efficiency.

In the embodiment, the number of the robots in the queue in the packaging area 30 is monitored, and when the number of the robots in the queue is different from the preset human-machine efficiency balance value, the human-machine number configuration is prompted to be regulated to balance the human-machine efficiency, so that technical effects of improving the picking efficiency and flexibly coping with logistics volume changes are achieved, and a purpose of avoiding resource waste is achieved.

It is to be noted that, in S30 and S31, the balance value, a value capable of achieving a relatively high human-machine coordination degree and configured to measuring the human-machine efficiency, can be set for the warehouse areas and a human-machine configuration according to a normal logistics volume, the number of the robots in the queue in the packaging area 30 being consistent with or proportional to the human-machine efficiency balance value when the human-machine efficiency is balanced, so that when the number of the robots in the queue in the packaging area 30 is different from the preset human-machine efficiency balance value, it indicates that the logistics volume may be in a peak period or a trough period, and prompting the human-machine number configuration to be regulated to balance the human-machine efficiency, for example, reducing pickers and adding robots, can achieve the technical effects of improving the picking efficiency and flexibly coping with the logistics volume changes and achieving the purpose of avoiding resource waste.

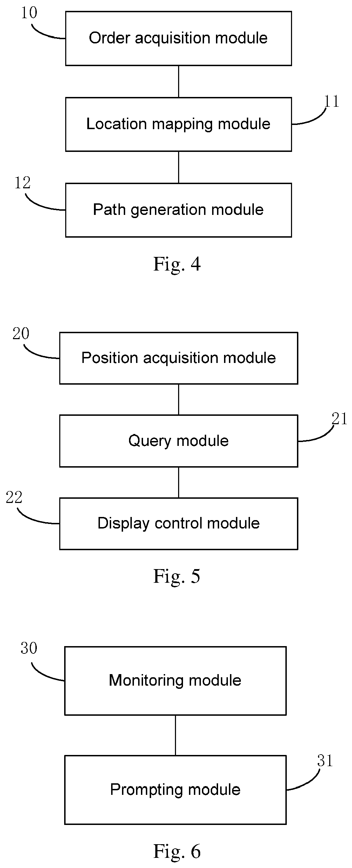

Fig. 4 is a schematic structural diagram of a robot-based subarea logistics picking apparatus according to an embodiment, and shows a robot-based subarea logistics picking apparatus. According to the picking apparatus, an occupation rate of a warehouse space can be reduced, the flexibility in planned use of the warehouse space can be improved, and moreover, human-machine configuration can be implemented flexibly to meet requirements of small-batch high-frequency order on subarea picking efficiency and flexibility in an electronic commerce environment.

Referring to Fig. 4 and Fig. 7, a robot-based subarea logistics picking apparatus includes:
an order acquisition module 10, configured to acquire order information of goods, the goods being arranged in a warehouse area and the order information including goods location information of the goods;
a location mapping module 11, configured to acquire picking location information, mapped by the goods location information, of a robot; and
a path generation module 12, configured to calculate a planned path for guiding the robot according to the picking location information to guide the robot to go to a corresponding picking location to convey the goods picked by a picker to a packaging area 30.

In the embodiment, the order information of the goods is acquired, the goods being arranged in the warehouse area and the order information including the goods location information of the goods, then the picking location information, mapped by the goods location information, of the robot is acquired, and the planned path for guiding the robot is calculated according to the picking location information to guide the robot to go to the corresponding picking location to convey the goods picked by the picker to the packaging area 30, so that an occupation rate of a warehouse space is reduced, the flexibility in planned use of the warehouse space is improved, and moreover, human-machine configuration can be implemented flexibly to meet requirements of small-batch high-frequency orders on subarea picking efficiency and flexibility in an electronic commerce environment.

It is to be noted that the order acquisition module 10 acquires the order information of the goods. The order information, acquired by a robot management system, of the goods can be from a warehouse management system. The warehouse management system stores warehouse area information, goods location information, goods information, robot information, picker information, etc., and the information can be called by the robot management system and the robot. Many goods can be arranged in each warehouse area, and pickers 40 and robots 50 can be allocated reasonably for goods picking. In the embodiment, the warehouse areas can include a first area 10 and a second area 20.

It is also to be noted that the robot can call the goods location information from the warehouse management system, so that the robot can calculate a picking location that the robot is responsible for in an order task (for example, responsible for one or more picking locations in picking location 1, picking location 2, picking location 3, picking location 5, and other picking locations) according to the received goods location information and send the picking location information to the location mapping module 11. In addition, the order acquisition module 10 can call the goods location information from the warehouse management system, so that the location mapping module 11 can find the goods location information of the robot by mapping.

It is further to be noted that the robot management system is logically bound with the robot, so that the robot management system can know a position of the robot at any time. The location mapping module 11 obtains the picking location information, so that the path generation module 12 can calculate the planned path for guiding the robot according to the goods location information and the real-time position of the robot, and the robot is guided through the planned path to go to the corresponding picking location to convey the goods picked by the picker to the packaging area 30.

Fig. 5 is a schematic structural diagram of an improved apparatus of a robot-based subarea logistics picking apparatus according to an embodiment, and shows an improved apparatus of the robot-based subarea logistics picking apparatus in Fig. 4.

Referring to Fig. 5, Fig. 7 and Fig. 8, the robot-based subarea logistics picking apparatus further includes:
a position acquisition module 20, configured to acquire current position information sent by a robot that has completed picking;
a query module 21, configured to query nearby goods location information of goods to be picked in an area closest to a current position according to the current position information; and
a display control module 22, configured to control a display terminal of the robot that has completed picking to display an interaction interface including the nearby goods location information to prompt a picker who has completed picking to pick the goods.

In the embodiment, the current position information sent by the robot that has completed picking is acquired, then the nearby goods location information of the goods to be picked in the area closest to the current position is queried according to the current position information, and the display terminal of the robot that has completed picking is controlled to display the interaction interface including the nearby goods location information to prompt the picker completing picking to pick the goods, so that technical effects of avoiding idle manpower and improving the picking efficiency are achieved.

Referring to Fig. 7 and Fig. 8, taking robot R1, robot R2, picker A and picker B as an example, it is assumed that picker A and picker B pick goods in the first area 10 and the second area 20 respectively, robot R1 is responsible for picking location 1, picking location 2 and picking location 3 and robot R2 is responsible for picking location 4, and it is also assumed that picking B and robot R2 complete a task of picking location 4 earlier. In such case, the robot management system receives current position information sent by robot R2, then queries nearby goods location information of goods to be picked in an area closest to a current position according to the current position information and controls a display terminal of the robot that has completed picking to display an interaction interface including the nearby goods location information to prompt picker B to go to a nearby goods location corresponding to the goods location information in the first area 10 to assist in picking goods. For example, A goods location information display bar 6001 displays nearby goods location information B-01-123.

It is to be noted that the position acquisition module 20 acquires the current position information sent by the robot that has completed picking and knows that a picking task of the picker for a corresponding picking location has been completed, so that the query module 21 can query the nearby goods location information of the goods to be picked in the area closest to the current position according to the current position information to prompt the picker to go to a closest picking location to pick the goods, and the technical effects of avoiding idle manpower and improving the picking efficiency are achieved.

It is also to be noted that, besides the nearby goods location information, information on the interaction interface controlled to be generated by the display control module 22 also includes information about the picker, information indicating that a picking task of the picker is completed in working time, goods information, goods barcode information, goods stock information, etc.

On one aspect, a picker can assist a picker in an adjacent area in picking goods through nearby goods location information, so that personnel circulation is promoted, and the picking efficiency is improved.

On another aspect, a picker in an area can pick goods in another area according to an interaction interface, and is not required to be trained specially for picking goods in adjacent areas, so that picking training time and cost are reduced.

On another aspect, the interaction interface automatically displays the information indicating that the picking task of the picker is completed in the working time, so that administrative cost in job rating can be reduced, and meanwhile, the enthusiasm of pickers is improved by encouraging more pay for more work to improve the picking efficiency. For example, a task statistical display bar 6003 displays the number of picked goods 12, and a personal information display bar displays the name Wang Yuan and number 1234 of the picker presently executing a task.

Fig. 6 is a schematic structural diagram of an improved apparatus of a robot-based subarea logistics picking apparatus according to an embodiment, and shows an improved apparatus of the robot-based subarea logistics picking apparatus in Fig. 4.

Referring to Fig. 6 and Fig. 7, the robot-based subarea logistics picking apparatus further includes:
a monitoring module 30, configured to monitor the number of robots in a queue in the packaging area and average time that the robots wait for being operated; and
a prompting module 31, configured to, when the number of the robots in the queue is different from
a preset human-machine efficiency balance value, prompt a human-machine number configuration to be regulated to balance human-machine efficiency.

In the embodiment, the number of the robots in the queue in the packaging area 30 is monitored, and when the number of the robots in the queue is different from the preset human-machine efficiency balance value, the human-machine number configuration is prompted to be regulated to balance the human-machine efficiency, so that technical effects of improving the picking efficiency and flexibly coping with logistics volume changes are achieved, and a purpose of avoiding resource waste is achieved.

It is to be noted that the balance value, a value capable of achieving a relatively high human-machine coordination degree and configured to measuring the human-machine efficiency, can be set for the warehouse areas and a human-machine configuration according to a normal logistics volume, the number of the robots in the queue in the packaging area being consistent with or proportional to the human-machine efficiency balance value when the human-machine efficiency is balanced, so that when the number of the robots in the queue in the packaging area is different from the preset human-machine efficiency balance value, it indicates that the logistics volume may be in a peak period or a trough period, and prompting the human-machine number configuration to be regulated to balance the human-machine efficiency, for example, reducing pickers and adding robots, can achieve the technical effects of improving the picking efficiency and flexibly coping with the logistics volume changes and achieving the purpose of avoiding resource waste.

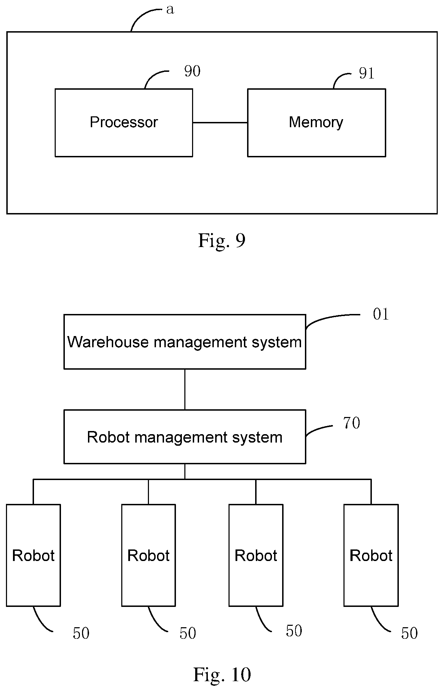

Fig. 9 is a structural diagram of an electronic device according to an embodiment, and shows an electronic device.

Referring to Fig. 9, an electronic device a includes a memory 90 and a processor 91, wherein the memory 90 stores a computer program, and the computer program is executed in the processor 91 to implement any method in Fig. 1 to 3.

In an embodiment, there is also provided a storage medium, which stores a computer program, wherein the computer program is executed in a processor to implement any method in Fig. 1 to 3.

Fig. 10 is a schematic structural diagram of a robot-based subarea logistics picking system according to an embodiment, and shows a robot-based subarea logistics picking system. According to the picking system, an occupation rate of a warehouse space can be reduced, the flexibility in planned use of the warehouse space can be improved, and moreover, human-machine configuration can be flexibly implemented to meet requirements of small-batch high-frequency order on subarea picking efficiency and flexibility in an electronic commerce environment.

Referring to Fig. 7 and Fig. 10, a robot-based subarea logistics picking system includes:
a robot management system 70, configured to acquire order information of goods, the goods being arranged in a warehouse area and the order information including goods location information of the goods; and
a robot 50, configured to send picking location information to the robot management system 70,
wherein the robot management system 70 acquires the picking location information mapped by the goods location information and calculates a planned path for guiding the robot 50 according to the picking location information; and
the robot 50 goes to a corresponding picking location according to the planned path to convey the goods picked by a picker to a packaging area.

It is to be noted that the robot management system 70 acquires the order information of the goods. The order information, acquired by the robot management system 70, of the goods can be from a warehouse management system 01. The warehouse management system 01 stores warehouse area information, goods location information, goods information, robot information, picker information, etc., and the information can be called by a cloud system and the robot. Many goods can be arranged in each warehouse area, and pickers 40 and robots 50 can be allocated reasonably for goods picking. In the embodiment, the warehouse areas can include a first area 10 and a second area 20.

It is also to be noted that the robot 50 can call the goods location information from the warehouse management system 01, so that the robot 50 can calculate the picking location that the robot is responsible for according to the received goods location information and send the picking location information to the robot management system 70. In addition, the robot management system 70 can call the goods location information from the warehouse management system 01, so that the goods location information of the robot 50 can be obtained by mapping.

It is further to be noted that the robot management system 70 is logically bound with the robot, so that the robot management system 70 can know a position of the robot at any time. The robot management system 70 obtains the picking location information, so that the planned path for guiding the robot 50 can be calculated according to the goods location information and the real-time position of the robot, and the robot 50 is guided through the planned path to go to the corresponding picking location to convey the goods picked by the picker to the packaging area.

### Industrial Applicability

According to the robot-based subarea logistics picking method provided in the embodiments of the invention, the order information of the goods is acquired, the goods being arranged in the warehouse area and the order information including the goods location information of the goods, then the picking location information, mapped by the goods location information, of the robot is acquired, and the planned path for guiding the robot is calculated according to the picking location information to guide the robot to go to the corresponding picking location to convey the goods picked by the picker to the packaging area, so that an occupation rate of a warehouse space is reduced, the flexibility in planned use of the warehouse space is improved, and moreover, human-machine configuration can be implemented flexibly to meet requirements of small-batch high-frequency orders changing dramatically with peak values on subarea picking efficiency and flexibility in an electronic commerce environment.

## Claims

1. A robot-based subarea logistics picking method, comprising:
acquiring (S10) order information of goods, the goods being arranged in a warehouse area and the order information comprise goods location information of the goods;
acquiring (S11) picking location information, mapped by the goods location information, of a robot; and
calculating (S12) a planned path according to the picking location information to guide the robot to go to a corresponding picking location to convey the goods picked by a picker to a packaging area;
wherein the method further comprising:
acquiring (S20) current position information of a robot that has completed picking;
querying (S21) location information of goods to be picked in an area closest to a current position according to the current position information; and
controlling (S22) a display terminal of the robot that has completed picking to display an interaction interface comprising the location information to prompt a picker who has completed picking to pick the goods;
wherein the method further comprising:
monitoring (S30) the number of robots in a queue in the packaging area;
monitoring average time that the robots wait for being operated; and
when the number of the robots in the queue is different from a preset human-machine efficiency balance value, prompting (S31) a human-machine number configuration to be regulated,
wherein the human-machine number configuration is a configuration of quantities of the robots and the pickers.

2. The robot-based subarea logistics picking method according to claim 1, wherein the interaction interface comprises information about the picker and completed picking work information of the picker in working time.

3. An electronic device, comprising a memory (90) and a processor (91), wherein the memory (90) stores a computer program, and the computer program is executed in the processor (91) to implement the method as claimed in any one of claims 1-2.

4. A robot-based subarea logistics picking system, comprising:
a robot management system (70), configured to acquire order information of goods, the goods being arranged in a warehouse area and the order information comprise goods location information of the goods; and
a robot (50), sending picking location information to the robot management system (70);
wherein the robot management system is adapted to acquire the picking location information mapped by the goods location information and calculates a planned path for guiding the robot (50) according to the picking location information; and
the robot (50) is adapted to go to a corresponding picking location according to the planned path to convey the goods picked by a picker to a packaging area;
wherein the robot management system is further configured to:
acquire current position information of a robot that has completed picking;
location information of goods to be picked in an area closest to a current position according to the current position information; and
control a display terminal of the robot that has completed picking to display an interaction interface comprising the location information to prompt a picker who has completed picking to pick the goods;
the robot management system (70) is further configured to:
monitor the number of robots in a queue in the packaging area;
monitor average time that the robots wait for being operated; and
when the number of the robots in the queue is different from a preset human-machine efficiency balance value, prompt a human-machine number configuration to be regulated, wherein the human-machine number configuration is a configuration of quantities of the robots and the pickers.

5. The robot-based subarea logistics picking system according to claim 4, wherein the interaction interface comprises information about the picker and completed picking work information of the picker in working time.

6. A storage medium, storing a computer program, wherein the computer program is executed in a processor to implement the method as claimed in any one of claims 1-2.

## Patentansprüche

1. Verfahren zur roboterbasierten Unterbereichslogistikkommissionierung, umfassend:
Erfassen (S10) von Bestellinformationen für Waren, wobei die Waren in einem Lagerbereich angeordnet sind und die Bestellinformationen Warenstandortinformationen der Waren enthalten;
Erfassen (S11) von von den Warenstandortinformationen zugeordneten Kommissionierungsstandortinformationen eines Roboters; und
Berechnen (S12) eines geplanten Wegs gemäß den Kommissionierungsstandortinformationen, um den Roboter derart zu führen, dass er zu einem entsprechenden Kommissionierungsstandort fährt, um die von einem Kommissionierer kommissionierten Waren zu einem Verpackungsbereich zu fördern,
wobei das Verfahren ferner Folgendes umfasst:
Erfassen (S20) von Ist-Positionsinformationen eines Roboters, der das Kommissionieren abgeschlossen hat;
Abfragen (S21) von Standortinformationen von zu kommissionierenden Waren in einem Bereich, der gemäß den Ist-Positionsinformationen einer Ist-Position am nächsten ist; und
Steuern (S22) eines Anzeigeendgeräts eines Roboters, der das Kommissionieren abgeschlossen hat, derart, dass es eine Interaktionsschnittstelle anzeigt, umfassend die Standortinformationen, um einen Kommissionierer, der das Kommissionieren der Waren abgeschlossen hat, zu informieren,
wobei das Verfahren ferner Folgendes umfasst:
Überwachen (S30) der Anzahl von Robotern in einer Schlange im Verpackungsbereich;
Überwachen der Durchschnittszeit, die die Roboter warten, um betätigt zu werden; und
Auffordern (S31), dass eine Mensch-Maschine-Zahl-Auslegung geregelt wird, wenn die Anzahl der Roboter in der Schlange sich von einem voreingestellten Mensch-Maschine-Effizienz-Gleichgewichtswert unterscheidet,
wobei die Mensch-Maschine-Zahl-Auslegung eine Auslegung von Mengen von Robotern und Kommissionierern ist.

2. Verfahren zur roboterbasierten Unterbereichslogistikkommissionierung nach Anspruch 1, wobei die Interaktionsschnittstelle Informationen über den Kommissionierer und Informationen über abgeschlossene Kommissionierungsarbeiten des Kommissionierers in der Arbeitszeit umfasst.

3. Elektronische Vorrichtung, umfassend einen Speicher (90) und einen Prozessor (91), wobei der Speicher (90) ein Computerprogramm speichert und das Computerprogramm im Prozessor (91) ausgeführt wird, um das Verfahren nach einem der Ansprüche 1-2 umzusetzen.

4. System zur roboterbasierten Unterbereichslogistikkommissionierung, umfassend:
ein Robotermanagementsystem (70), das ausgelegt ist, um Bestellinformationen für Waren zu erfassen, wobei die Waren in einem Lagerbereich angeordnet sind und die Bestellinformationen Warenstandortinformationen der Waren enthalten; und
einen Roboter (50), der Kommissionierungsstandortinformationen an das Robotermanagementsystem (70) sendet,
wobei das Robotermanagementsystem eingerichtet ist, um die von den Warenstandortinformationen zugeordneten Kommissionierungsstandortinformationen zu erfassen, und
einen geplanten Weg berechnet, um den Roboter (50) gemäß den Kommissionierungsstandortinformationen zu führen; und
der Roboter (50) eingerichtet ist, um zu einem entsprechenden Kommissionierungsstandort gemäß dem geplanten Weg zu fahren, um die von einem Kommissionierer kommissionierten Waren zu einem Verpackungsbereich zu fördern,
wobei das Robotermanagementsystem ferner ausgelegt ist, um:
Ist-Positionsinformationen eines Roboters, der das Kommissionieren abgeschlossen hat, zu erfassen;
Standortinformationen von zu kommissionierenden Waren in einem Bereich, der gemäß den Ist-Positionsinformationen einer Ist-Position am nächsten ist, abzufragen; und
ein Anzeigeendgerät eines Roboters, der das Kommissionieren abgeschlossen hat, derart zu steuern, dass es eine Interaktionsschnittstelle anzeigt, umfassend die Standortinformationen, um einen Kommissionierer, der das Kommissionieren der Waren abgeschlossen hat, zu informieren,
wobei das Robotermanagementsystem (70) ferner ausgelegt ist, um:
die Anzahl von Robotern in einer Schlange im Verpackungsbereich zu überwachen;
die Durchschnittszeit, die die Roboter warten, um betätigt zu werden, zu überwachen; und
aufzufordern, dass eine Mensch-Maschine-Zahl-Auslegung geregelt wird, wenn die Anzahl der Roboter in der Schlange sich von einem voreingestellten Mensch-Maschine-Effizienz-Gleichgewichtswert unterscheidet,
wobei die Mensch-Maschine-Zahl-Auslegung eine Auslegung von Mengen von Robotern und Kommissionierern ist.

5. System zur roboterbasierten Unterbereichslogistikkommissionierung nach Anspruch 4, wobei die Interaktionsschnittstelle Informationen über den Kommissionierer und Informationen über abgeschlossene Kommissionierungsarbeiten des Kommissionierers in der Arbeitszeit umfasst.

6. Speichermedium, das ein Computerprogramm speichert, wobei das Computerprogramm in einem Prozessor ausgeführt wird, um das Verfahren nach einem der Ansprüche 1-2 umzusetzen.

## Revendications

1. Procédé d'enlèvement logistique de sous-zone reposant sur un robot, comprenant :
acquérir (S10) des informations de commande de marchandise, la marchandise étant agencée dans une zone d'entrepôt et les informations de commande comprennent des informations d'emplacement de la marchandise ;
acquérir (S11) des informations d'emplacement d'enlèvement, mappées par les informations d'emplacement de la marchandise, d'un robot ; et
calculer (S12) un trajet planifié selon les informations d'emplacement d'enlèvement pour guider le robot à aller à un emplacement d'enlèvement correspondant pour transporter la marchandise prélevée par un préparateur vers une zone d'emballage ;
dans lequel le procédé comprend en outre :
acquérir (S20) des informations de position actuelle d'un robot qui a terminé l'enlèvement ;
interroger (S21) les informations d'emplacement de la marchandise à enlever dans une zone la plus proche d'une position actuelle en fonction des informations de position actuelle ; et
commander (S22) un terminal d'affichage du robot qui a terminé l'enlèvement pour afficher une interface d'interaction comprenant les informations d'emplacement pour solliciter un préparateur qui a terminé l'enlèvement à enlever la marchandise ;
dans lequel le procédé comprend en outre :
surveiller (S30) le nombre de robots dans une file d'attente dans la zone d'emballage ;
surveiller le temps moyen pendant lequel les robots attendent d'être mis en fonction ; et
lorsque le nombre de robots dans la file d'attente est différent d'une valeur d'équilibre d'efficacité homme-machine prédéfinie, solliciter (S31) une configuration de nombre homme-machine à ajuster, dans lequel la configuration de nombre homme-machine est une configuration de quantités des robots et des préparateurs.

2. Procédé d'enlèvement logistique de sous-zone reposant sur un robot selon la revendication 1, dans lequel l'interface d'interaction comprend des informations sur le préparateur et des informations de travail d'enlèvement terminé du préparateur en temps de travail.

3. Dispositif électronique, comprenant une mémoire (90) et un processeur (91), dans lequel la mémoire (90) enregistre un programme informatique, et le programme informatique est exécuté dans le processeur (91) pour mettre en œuvre le procédé selon l'une quelconque des revendications 1-2.

4. Système d'enlèvement logistique de sous-zone reposant sur un robot, comprenant :
un système de gestion de robot (70), configuré pour acquérir des informations de commande de marchandise, la marchandise étant agencées dans une zone d'entrepôt et
les informations de commande comprennent des informations d'emplacement de marchandise de la marchandise ; et
un robot (50), envoyant des informations d'emplacement d'enlèvement au système de gestion de robot (70) ;
dans lequel le système de gestion de robot est adapté pour acquérir les informations d'emplacement d'enlèvement mappées par les informations d'emplacement de marchandise et calcule un trajet planifié pour guider le robot (50) selon les informations d'emplacement d'enlèvement ; et
le robot (50) est adapté pour aller à un emplacement d'enlèvement correspondant selon le trajet prévu pour transporter la marchandise enlevée par un préparateur vers une zone d'emballage ;
dans lequel le système de gestion de robot est en outre configuré pour :
acquérir des informations de position actuelle d'un robot qui a terminé l'enlèvement ;
des informations d'emplacement de la marchandise à enlever dans une zone la plus proche d'une position actuelle en fonction des informations de position actuelle ; et
commander un terminal d'affichage du robot qui a terminé l'enlèvement pour afficher une interface d'interaction comprenant les informations d'emplacement pour solliciter un préparateur qui a terminé l'enlèvement à enlever la marchandise ;
le système de gestion de robot (70) est en outre configuré pour :
surveiller le nombre de robots dans une file d'attente dans la zone d'emballage ;
surveiller le temps moyen pendant lequel les robots attendent d'être mis en fonction ; et
lorsque le nombre de robots dans la file d'attente est différent d'une valeur d'équilibre d'efficacité homme-machine prédéfinie, solliciter une configuration de nombre homme-machine à ajuster, dans lequel la configuration de nombre homme-machine est une configuration de quantités des robots et des préparateurs.

5. Système d'enlèvement logistique de sous-zone reposant sur un robot selon la revendication 4, dans lequel l'interface d'interaction comprend des informations sur le préparateur et des informations de travail d'enlèvement terminé du préparateur en temps de travail.

6. Support d'enregistrement, enregistrant un programme informatique, dans lequel le programme informatique est exécuté dans un processeur pour mettre en œuvre le procédé selon l'une quelconque des revendications 1-2.
